# EUROPEAN PATENT SPECIFICATION

(11) **EP 1 879 001 B1**
(45) Date of publication and mention of the grant of the patent: **27.04.2016**
(21) Application number: 06014255.1
(22) Date of filing: 10.07.2006
(51) Int. Cl.: G01C 21/26, G06F 17/30

(54) **Format description for a navigation database**
Formatbeschreibung für eine Navigationsdatenbank
Description du format pour une base de données de navigation

(43) Date of publication of application: 16.01.2008
(73) Proprietor: Harman Becker Automotive Systems GmbH, 76307 Karlsbad (DE)
(72) Inventor: Gelhar, Jens, 20257 Hamburg (DE)
(74) Representative: Grünecker Patent- und Rechtsanwälte PartG mbB

(56) References cited:
- WO-A-03/094007
- US-B1- 6 424 933
- HALSTEAD R.H.: 'SELF-DESCRIBING FILES + SMART MODULES= PARALLEL PROGRAM VISUALIZATION' HEORY AND PRACTICE OF PARALLEL PROGRAMMING vol. 907, 07 November 1994, pages 253 - 283, XP047002660

## Description

### Field of Invention

The present invention relates to databases, in particular, databases in navigation systems. The invention particularly relates to a method for the organization of data in databases by means of an appropriate physical storage format.

### Background of the Invention

Navigation systems become increasingly prevalent in present-day vehicles, in particular, in mid- and high-class automobiles. The navigation systems perform visual and/or acoustic route guidance to a pre-determined destination that is input by the user before or during a travel.

Navigation systems comprise relatively huge databases storing lists of entries representing, e.g., cities, streets, points of interest, etc. Such lists become readily very long and are difficult to manage given the limited computer resources available in navigation systems.

According to a common approach for managing the huge data provided by navigation databases customized proprietary binary (or text) data formats are defined to minimize the storage requirements and optimize data access in view of a particular application. This approach suffers from the problem that such data formats are difficult to adapt to future unforeseen requirements and format extensions, e.g., due to modified standards of recent versions of the navigation software. Whereas an updated version of a software can usually be designed to cope with older databases it is challenging to amend a database with a modified more recent format in such a way that it still can be read by older software releases.

Thus, commonly one seeks to avoid incompatible format amendments as much as possible, in particular, by providing some overhead in the original data format that might be useful for future format specifications. The overhead has the disadvantage that the binary data necessarily comprise unused or only partially used data portions and are consequently larger than necessary at a given stage of the software development. In addition, it is not possible to create proprietary data formats that are adaptable to all unforeseen but nevertheless desirable future format and functionality amendments and up-gradings.

US -B1- 6 424 933 discloses a method for making computer-generated maps including a different scale factor for each road in a route. The scale factors are used to optimize the route map against an objective function that considers factors such as the number of false intersections in the route and the number of roads falling below a minimum length threshold. The position of each label corresponding to a road in the map is selected from a continuous range of possible positions by refinement against a target function that minimizes the number of roads, labels and annotations the label intersects as well as the distance between the label and the center of the road corresponding to the label.

WO 3/094007 A discloses a method for creating and abstract machine instruction sequence from one or more stylesheets and using this sequence to perform a transformation on one or more input documents. The method includes the steps of parsing the stylesheet and compiling it into the sequence of abstract machine instructions. The instructions are executed by the abstract machine with input documents to produce one or more output documents.

Another approach is to implement data ranges of the original database format that are initially ignored by the software and are only interpreted in future releases of the applied software after these ranges have been used, e.g., for information not available in the original database. Again, a significant overhead results, since information about skipping such data ranges for older data or interpreting these data ranges for extended data entries have to be stored in the database format. Moreover, extensions of the databases can only be performed at positions that are foreseen beforehand and, thus, the flexibility for format amendments is limited.

Usage of generic data formats, e.g., in relational databases, is usually not preferred in databases from embedded systems as, e.g., navigation databases for navigation systems in vehicles, since generic formats are not optimized for the actual application resulting in larger data amounts and slower data access as compared to proprietary data formats which is are unacceptable disadvantage in systems with limited computer and storage resources.

For the same reason employment of self-describing formats as, e.g., the Extendable Markup Language (XML) as a text format, that allows for storing of arbitrary data entities assigned with identification tags that are used by the application software for filtering the respective necessary information is not preferable. Tags drastically increase the storage requirements.

In view of the above, it is an object of the present invention to provide a method for managing a navigation database in an efficient and reliable manner that allows for further extensions without any loss of compatibility.

### Description of the Invention

The above described problems are solved by the method for organizing and managing data in a navigation database of a navigation system comprising one or more data files, the data being used by an application software, according to claim 1, comprising
storing data in the at least one data file;
implementing at least one format description for the at least one data file of the navigation database, wherein the format description declares types of records consisting of different data types and declares a sequence of elements of the records;
implementing a parser for interpreting data stored in the at least one data file and for parsing the data to an application navigation software, wherein the parser is controlled by the at least one format description.

A database file (or volume) may, e.g., include navigation data (streets, lanes, traffic signs, crossing views, buildings, topographical data etc.) for one country or for a federal state. A physical file may be provided by a storage medium, e.g., a hard disk or a CD or a DVD. The application software is, e.g., a navigation software installed in a navigation system that comprises the navigation database.

According to the present invention, a format description is implemented for a data file, preferably, for all data files included in the navigation database. If a format description is implemented for more than one data file the same format description may be implemented for these data files. By the format description types of records are declared that consist of elements of different data types as, e.g., integers, character strings and pointers. Moreover, the format description declares the sequence of elements of the records. The format description represents a byte code to be interpreted by the parser.

The implementation of the format description can advantageously be performed by generating a format description table in a header of the at least one data file that defines record types used in the at least one data file and declares the sequence of elements constituting the records.

The format description table can be regarded as a byte code that is to be interpreted by a virtual parsing machine. The format description table may comprise a list of rows, each of a predetermined number of data entries as, e.g., words, e.g., of a multiple integer of 8 or 16 Bits, and each comprising at least one command for the parser.

The format description is read by the parser that interprets data stored in the at least one data file by means of the format description. The parser may be a table-controlled parser configured to generate, e.g., a parse tree from the read data that subsequently can be used for further processing by some application software, in particular, for code generating by a compiler or executing by an interpreter.

Consequently, the actual mapping of the data content stored in the navigation database to a binary or text format is not part of the software but only defined in the format description (table) of the data file. Thus, the storage size of the navigation database can be modified without the need for any amendment of the application software. Moreover, the format description controlling a parser is not bound to a particular hardware structure.

Database modifications and enhancements can readily be implemented by modification of the format description or, in particular, by the usage of more than one format description. In the latter case, one description format may make use of a kind of syntactic elements (as read, skip access to register instructions, etc.) of a first standard version employed in the database and may enable only software that is compatible to the first standard. In addition, one or more further format descriptions can be provided using additional syntactical elements defined by more recent versions of the first standard.

It is stated that the above described method as well as embodiments thereof described below can applied to binary encoded read-only databases in general, in particular, to binary encoded read-only databases in embedded systems. The method is particularly useful in the context of navigation databases comprised in vehicle navigation systems, since vehicle navigation systems represent important examples of embedded systems that exhibit relatively limited computer/memory resources.

According to an embodiment, the parser comprises at least one register and the format description table comprises information on the format of the data to be read and/or on the transfer of read data to the at least one register and/or on the semantics of the read data that is relevant for the application software in order to interpret the data. By these kinds of information an efficient management of the data stored in the navigation database is possible.

In particular, the format description table may comprise in each row a parser instruction, a syntax ID and a semantic ID for an efficient control of the parser. The parser instruction controls what kind of data shall be read by the parser. The parser instruction may consist of a fixed-length or variable-length integer or character strings or a pointer for referencing, e.g., records.

More complex instruction as, e.g., for branching data, i.e. jumping from one record into another, or for parsing a nested record may also be used as parser instructions. Instructions can also be executed conditionally. In this case, the parser is enabled to evaluate a conditional expression and depending on the evaluation result will execute an instruction or will skip it. The parser may also execute loop commands for reading arrays or lists of data entities with respect to data stored in the at least one data file of the navigation database. In arrays sequences of data elements are repeated.

The syntax ID may be simple an integer and represents a way to define what the parser shall do with the stored data. The syntax ID let the parser, e.g., read data of a particular kind and/or perform a predetermined arithmetic operation on the read data. For this, the parser according to an embodiment comprises at least one register and performs arithmetic operations. If the parser is provided with at least one register, register access and register write instruction are further examples for the above-mentioned parser instruction.

The semantic ID represents a tag that may be provided for each element the records are comprised of. The parser passes the ID number together with the corresponding data element, which has been read due to the parser instruction, to the application software. By means of the semantic IDs the meaning of the elements can be understood by the application software.

Unknown semantic IDs are ignored and, thus, format extensions can readily be added without loss of compatibility of the current version of the application software. In fact, due to the usage of semantic IDs the database format is as flexible and extendable as self-describing formats as, e.g., the Extendable Markup Language (XML). However, according to the present invention there is no overhead for individual tags assigned to data elements, since tagging is performed exclusively in the format description that is valid for an entire data file of the navigation database.

With respect to the semantic structure, it may be preferred that the parser ignores data entities in the rows that follow a predetermined number of data entries. In this case, in a more recent release additional (e.g., proprietary) data may be added to the data elements of a record of a first standard version of the database that are ignored by the application software designed for the first standard version but that can be interpreted by a more recent software version. In the same sense, unknown semantic IDs introduced by more recent versions are ignored by a parser and/or an application software that is not up-to-date.

The format description may be installed directly in the at least one data file of the navigation database or provided on a data volume different from each of the data volumes of the navigation database or a data set different from each of the data files of the navigation database. For example, a new extended format description may,be implemented in an already existing navigation database by downloading via the Internet or may be provided on a separate DVD. In other words the format description may be provided on the same physical volume (medium) as the navigation database (but as a separate data set) or on a different one.

The data stored in the at least one data file might be at least partly packed, if the parser is enabled to suitably interpret packed data. In particular, in the context of navigation database of navigation system in vehicles it is desirable that the data can be stored in some packed manner in order to reduce the necessary storage capacities.
The present invention also provides a navigation database for a navigation system comprising at least one data file and a format description for the at least one data file configured to control a parser that is configured to interpret data stored in the at least one data file and to parse the data to a navigation software, wherein the format description declares types of records consisting of different data types and declares a sequence of elements of the records.

Additional features and advantages of the invention will be described with reference to the drawings. In the description, reference is made to the accompanying figures that are meant to illustrate preferred embodiments of the invention. It is understood that such embodiments do not represent the full scope of the invention that is defined by the claims given below.
Figure 1 illustrates elements of the inventive method of organizing and managing data in a navigation database comprising a format description and a parser.
Figure 2 illustrates the operation of the parser according to an example of the herein disclosed method. The operation of the parser is controlled by a format description table.

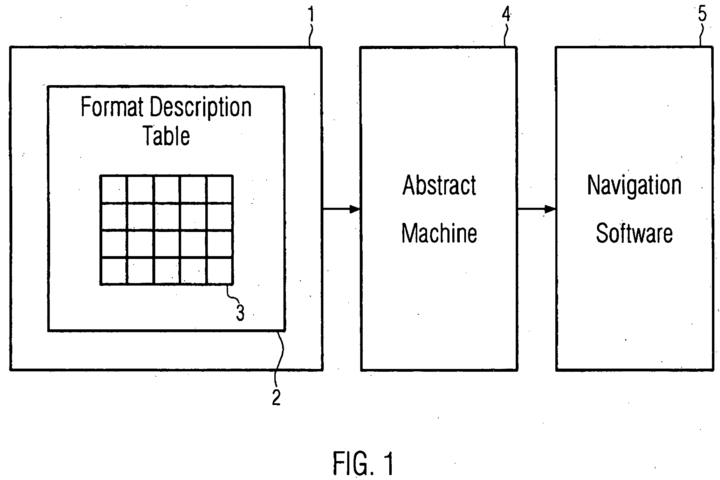

As illustrated in Figure 1 a navigation database 1 comprises a data file 2 comprising a format description table as well as data blocks 3 consisting of records built up by data elements. A parser 4 is implemented for reading and interpreting of data (elements). The parser is controlled by the format description table of the data file 2. Depending on instructions included in the format description table data is read by the parser.

The data comprises character strings some of which are compressed by a token-based compression. Byte values that are not present in any compressed string can be used as tokens and a byte sequence of arbitrary length is assigned to each token. The parser can uncompress a compressed string by replacing every string byte representing a token by its assigned replacement sequence. The tokens can be managed by a token table calculated for each block.

The format description table consists of a sequence of binary rows and each row consists of words, e.g., 16 bit numbers. All rows have the same length defined in the header (e.g., the first row of the table) of the format description table. According to the present example, only the first ten words are considered by the parser 4. The first word is used for the parser instruction for the parser.

The format description table includes syntax IDs and semantic IDs. Syntax IDs may, e.g., be used as the respective second word of a row of the format description table and semantic IDs as the third word. The semantic ID is parsed to the navigation software 5 together with the data element read due to the parser instruction by the parser 4. The semantic ID represents a data tag that can be interpreted by the navigation software 5. By means of semantic IDs the navigation software can interpret the meaning of the data elements; unknown semantic IDs will be ignored. Thus, format extensions can be implemented by means of new semantic IDs without loss of compatibility between different versions of the navigation software and/or the navigation database.

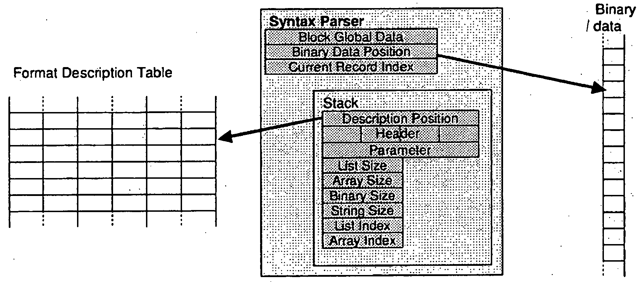

Figure 2 shows an example for the interaction of a parser and a format description according to the present invention. The parser is implemented as a syntax parser. The format description is implemented as a format description table that is included in a data file header and that is interpreted by the syntax parser as a byte code. The format description table includes rows of the same length each consisting of a set of words. In particular, the format description table includes parser instructions controlling what kind of binary data elements shall be read by the syntax parser.

According to the present example, the parser makes use of registers. A stack-like structure is implemented for a number of registers in order to cope with nested record declarations, if, e.g., some record type contains a data element of another record type.

As shown in Figure 2, nine registers are organized in a register stack. The description position register points to a current instruction in the format description table. The header register is a working register in which the syntax parser loads a numerical value that, e.g., can be used to control a conditional execution of table rows. The parameter register is used for the management of nested records. For records of the uppermost level this register may contain a zero and for inner records it contains some 32 bit parameter value.

The list size, array size (sequences of data elements are repeated in arrays) and binary size registers are used for the managements of data lists and arrays as, e.g., repeated reading or reading up to a particular list entry, and control of special binary data blocks representing, e.g., bitmap images or cryptic binary encoding. The list and array index register are used for managing iteration of the syntax parser over list and array elements, respectively.

According to the present example, three further registers are employed. The block global data register actually represents a set of registers storing global information of a currently parsed block as, e.g., the block index uniquely identifying a data block, and the number of records contained in the block. The binary data position register refers to a byte position in the binary data of block. Data to be read according to a parser instruction will be read from the byte position on the binary data position register refers to. The current record index contains the record index of the pointer to the currently parsed record or list element.

Employment of the registers, in particular, enables the parser to perform arithmetic operations and conditional execution of instructions in general and execution of loop instructions for reading arrays and lists of data elements.

## Claims

1. Method for organizing and managing data in a navigation database (1) of a navigation system comprising at least one data file (2), comprising
storing data in the at least one data file (2);
implementing at least one format description for the at least one data file (2) of the navigation database (1), wherein the format description declares types of records consisting of different data types and declares a sequence of elements of the records;
implementing a parser (4) for interpreting data stored in the at least one data file (2) and for parsing the data to a navigation software, wherein the parser is controlled by the at least one format description.

2. Method according to claim 1, wherein the implementation of the format description is performed by generating a format description table in a header of the at least one data file (2) that defines record types used in the at least one data file (2) and declares the sequence of elements constituting the records.

3. Method according to claim 2, wherein the format description table comprises rows each of which comprises the same number of words and at least one instruction for the parser (4) on the basis of which the parser (4) interprets data stored in the at least one data file (2).

4. Method according to claim 2 or 3, wherein the parser (4) comprises at least one register and the format description table comprises information on the format of the data to be read and/or the transfer of read data to the at least one register and/or the semantics of the read data.

5. Method according to claim 4, wherein the format description table comprises a parser (4) instruction, a syntax ID and a semantic ID in each row.

6. Method according to one of the claims 3 - 5, wherein the parser (4) comprises at least one register and performs arithmetic operations and/or conditional execution of an instruction comprised in a row of the format description table and/or executes loop commands for reading arrays or lists of data entities with respect to data stored in the at least one data file (2) of the navigation database (1).

7. Method according to one of the claims 3 - 6, wherein the parser (4) ignores data entities in the rows that follow a predetermined number of data entries.

8. Method according to one of the preceding claims, wherein the format description is installed in the at least one data file (2) of the navigation database (1) or provided on a data volume different from each of the data volumes of the navigation database (1) or a data set different from each of the data files (2) of the navigation database (1).

9. Method according to one of the preceding claims, wherein the data is at least partly packed and wherein the parser (4) is enabled to interpret packed data.

10. Navigation database (1) for a navigation system comprising at least one data file (2) and a format description for the at least one data file (2) configured to control a parser (4) that is configured to interpret data stored in the at least one data file (2) and to parse the data to a navigation software, wherein the format description declares types of records consisting of different data types and declares a sequence of elements of the records.

## Patentansprüche

1. Verfahren zum Organisieren und Verwalten von Daten in einer Navigationsdatenbank (1) eines Navigationssystems, umfassend wenigstens eine Datendatei (2), umfassend
Speichern von Daten in der wenigstens einen Datendatei (2);
Implementieren wenigstens einer Formatbeschreibung für die wenigstens eine Datendatei (2) der Navigationsdatenbank (1), wobei die Formatbeschreibung Arten von Einträgen angibt, die aus verschiedenen Datentypen bestehen, und eine Abfolge von Elementen der Einträge angibt;
Implementieren eines Parsers (4) zum Interpretieren der in der wenigstens einen Datendatei (2) gespeicherten Daten und zum Parsen der Daten in eine Navigationssoftware, wobei der Parser durch die wenigstens eine Formatbeschreibung gesteuert wird.

2. Verfahren nach Anspruch 1, wobei die Implementierung der Formatbeschreibung durchgeführt wird, indem eine Formatbeschreibungstabelle in einer Kopfzeile der wenigstens einen Datendatei (2) erzeugt wird, die die Eintragsarten definiert, die in der wenigstens einen Datendatei (2) verwendet werden, und die Abfolge der Elemente angibt, die die Einträge ausmachen.

3. Verfahren nach Anspruch 2, wobei die Formatbeschreibungstabelle Zeilen umfasst von denen jede die gleiche Anzahl an Wörtern und wenigstens eine Anweisung für den Parser (4) auf deren Basis der Parser (4) in der wenigstens einen Datendatei (2) gespeicherte Daten interpretiert, umfasst.

4. Verfahren nach Anspruch 2 oder 3, wobei der Parser (4) wenigstens ein Verzeichnis umfasst und die Formatbeschreibungstabelle Informationen über das Format der zu lesenden Daten und/oder die Übertragung der gelesenen Daten an das wenigstens eine Verzeichnung und/oder die Semantik der gelesenen Daten umfasst.

5. Verfahren nach Anspruch 4, wobei die Formatbeschreibungstabelle in jeder Zeile eine Anweisung für den Parser (4), eine Syntax-ID und eine Semantik-ID umfasst.

6. Verfahren nach Anspruch 3-5, wobei der Parser (4) wenigstens ein Verzeichnis umfasst und arithmetische Operationen und/oder bedingte Ausführung einer Anweisung durchführt, die in einer Zeile der Formatbeschreibungstabelle enthalten ist, und/oder Schleifenbefehle zum Lesen von Feldern oder Listen von Datenentitäten in Bezug auf Daten ausführt, die in der wenigstens einen Datendatei (2) der Navigationsdatenbank (1) gespeichert sind.

7. Verfahren nach einem der Ansprüche 3-6, wobei der Parser (4) Datenentitäten in den Zeilen ignoriert, die einer vorgegebenen Anzahl von Datenentitäten folgen.

8. Verfahren nach einem der vorangehenden Ansprüche, wobei die Formatbeschreibung in der wenigstens einen Datendatei (2) der Navigationsdatenbank (1) installiert oder in einem Datenvolumen, das sich von jedem der Datenvolumen der Navigationsdatenbank (1) unterscheidet, oder einem Datensatz, der sich von jeder der Datendateien (2) der Navigationsdatenbank (1) unterscheidet, bereitgestellt ist.

9. Verfahren nach einem der vorangehenden Ansprüche, wobei die Daten wenigstens teilweise gepackt sind und wobei der Parser (4) die gepackten Daten interpretieren kann.

10. Navigationsdatenbank (1) für ein Navigationssystem, umfassend wenigstens eine Datendatei (2) und eine Formatbeschreibung für die wenigstens eine Datendatei (2), die konfiguriert ist, um einen Parser (4) zu steuern, der konfiguriert ist, um Daten zu interpretieren, die in der wenigstens einen Datendatei (2) gespeichert sind, und die Daten in eine Navigationssoftware zu parsen, wobei die Formatbeschreibung Arten von Einträgen angibt, die aus verschiedenen Datentypen bestehen, und eine Abfolge von Elementen der Einträge angibt.

## Revendications

1. Procédé pour organiser et gérer des données dans une base de données de navigation (1) d'un système de navigation comprenant au moins un fichier de données (2), comprenant :
le stockage de données dans l'au moins un fichier de données (2) ;
la mise en oeuvre d'au moins une description de format pour l'au moins un fichier de données (2) de la base de données de navigation (1), dans lequel la description de format annonce des types d'enregistrements comprenant différents types de données et annonce une séquence d'éléments des enregistrements ;
la mise en oeuvre d'un analyseur syntaxique (4) pour interpréter des données stockées dans l'au moins un fichier de données (2) et pour effectuer l'analyse syntaxique des données pour un logiciel de navigation,
dans lequel l'analyseur syntaxique est commandé par l'au moins une description de format.

2. Procédé selon la revendication 1, dans lequel la mise en oeuvre de la description de format est effectuée en générant une table de description de format dans un entête de l'au moins un fichier de données (2) qui définit des types d'enregistrements utilisés dans l'au moins un fichier de données (2) et annonce la séquence d'éléments constituant les enregistrements.

3. Procédé selon la revendication 2, dans lequel la table de description de format comprend des lignes, chacune desquelles comprend le même nombre de mots et au moins une instruction pour l'analyseur syntaxique (4) sur la base de laquelle l'analyseur syntaxique (4) interprète des données stockées dans l'au moins un fichier de données (2).

4. Procédé selon la revendication 2 ou 3, dans lequel l'analyseur syntaxique (4) comprend au moins un registre et la table de description de format comprend des informations sur le format des données à lire et/ou le transfert de données lues à l'au moins un registre et/ou la sémantique des données lues.

5. Procédé selon la revendication 4, dans lequel la table de description de format comprend une instruction d'analyseur syntaxique (4), un identificateur de syntaxe et un identificateur de sémantique dans chaque ligne.

6. Procédé selon une des revendications 3 à 5, dans lequel l'analyseur syntaxique (4) comprend au moins un registre et effectue des opérations arithmétiques et/ou une exécution conditionnelle d'une instruction comprise dans une ligne de la table de description de format et/ou exécute des commandes de boucle pour lire des matrices ou listes d'entités de données par rapport à des données stockées dans l'au moins un fichier de données (2) de la base de données de navigation (1).

7. Procédé selon une des revendications 3 à 6, dans lequel l'analyseur syntaxique (4) ignore des entités de données dans les lignes qui suivent un nombre prédéterminé d'entrées de données.

8. Procédé selon une des revendications précédentes, dans lequel la description de format est installée dans l'au moins un fichier de données (2) de la base de données de navigation (1) ou fourni sur un volume de données différent de chacun des volumes de données de la base de données de navigation (1) ou un ensemble de données différent de chacun des fichiers de données (2) de la base de données de navigation (1).

9. Procédé selon une des revendications précédentes, dans lequel les données sont au moins partiellement comprimées et dans lequel l'analyseur syntaxique (4) est activé pour interpréter des données comprimées.

10. Base de données de navigation (1) pour un système de navigation comprenant au moins un fichier de données (2) et une description de format pour l'au moins un fichier de données (2), configurée pour commander un analyseur syntaxique (4) qui est configuré pour interpréter des données stockées dans l'au moins un fichier de données (2) et pour effectuer l'analyse syntaxique des données pour un logiciel de navigation, dans lequel la description de format annonce des types d'enregistrements comprenant différents types de données et annonce une séquence d'éléments des enregistrements.
